# EUROPÄISCHE PATENTSCHRIFT

(11) **EP 1 204 538 B1**
(45) Veröffentlichungstag und Bekanntmachung des Hinweises auf die Patenterteilung: **01.10.2003**
(21) Anmeldenummer: 00956187.9
(22) Anmeldetag: 14.07.2000
(51) Int. Cl.: B60H 1/34, F24F 13/15

(54) **LUFTAUSSTRÖMER MIT LAMELLEN**
AIR VENT WITH LAMELLAE
AERATEUR A LAMELLES

(30) Priorität: 28.07.1999 DE 19935338
(43) Veröffentlichungstag der Anmeldung: 15.05.2002
(73) Patentinhaber: Volkswagen AG, 38436 Wolfsburg (DE)
(72) Erfinder: FINKE, Oliver, D-38464 Gr. Twülpstedt (DE)
(86) Internationale Anmeldenummer: EP0006786
(87) Internationale Veröffentlichungsnummer: WO01008912

(56) Entgegenhaltungen:
- EP-A- 0 899 136
- DE-A- 3 719 835
- DE-U- 29 817 513
- FR-A- 2 671 520
- US-A- 3 552 295

## Beschreibung

Die Erfindung betrifft einen Luftausströmer, insbesondere für einen Fahrzeuginnenraum, mit schwenkbar angeordneten Lamellen, die äußere Lamellen umfassen und die mit Hilfe einer Kopplungseinrichtung so miteinander gekoppelt sind, daß die Lamellen bei Betätigung der Kopplungseinrichtung gleichzeitig geschwenkt werden können, und wenigstens einer Rand-Lamelle, die benachbart zu einer der äußeren Lamellen schwenkbar angeordnet ist.

Luftausströmer dieser Art finden vor allem in Kraftfahrzeugen Verwendung und werden auch als Jalousiedüse oder Belüftungsgrill bezeichnet. In den Kraftfahrzeugen werden sie insbesondere in das Armaturenbrett eingebaut. Die Luftausströmer weisen ein Gehäuse auf, dessen Öffnung zum Innenraum des Kraftfahrzeugs mit Hilfe schwenkbarer Lamellen geöffnet oder geschlossen werden kann. Die Lamellen können in verschiedenen Schwenkstellungen angeordnet sein, um die Richtung des austretenden Luftstroms zu variieren. Hierbei wird angestrebt, das ein möglichst homogener Luftstrom ausgebildet wird. Insbesondere im Bereichen äußerer Lamellen, die am Rand der Öffnung des Luftausströmers angeordnet sind, treten jedoch Verwirbelungen und Abweichungen von der Hauptrichtung des austretenden Luftstroms auf.

In DE 43 15 220 ist bei einem Luftausströmer zur Verbesserung der Luftstrbmcharakteristik ein im unteren Bereich des Luftausströmers angeordneten Keil oder eine untere Klappe vorgesehen, die den unteren Abschluß der Lamellenanordnung in der dem Innenraum des Kraftfahrzeugs zugewandten Öffnung bildet.

In DE 29 81 75 13 ist ein Luftausströmer offenbart, bei dem zwischen einer oberen und einer unteren Rand-Lamelle Lamellen schwenkbar angeordnet sind. Die Lamellen können mit Hilfe einer Kopplungseinrichtung gleichzeitig geschwenkt werden. Die untere und die obere Rand-Lamelle sind mit einer weiteren Kopplungseinrichtung verbunden. Die Kopplungseinrichtung und die weitere Kopplungseinrichtung sind miteinander so verbunden, daß die Lamellen, die untere und die obere Rand-Lamelle gleichzeitig geschwenkt werden können. Um einerseits die Lamellen mit Hilfe der Kopplungseinrichtung gleichzeitig zu schwenken und andererseits auch die untere und die obere Rand-Lamelle unter Einbeziehung der Kopplungseinrichtung und der weiteren Kopplungseinrichtung mit den Lamellen gemeinsam zu schwenken, ist ein mechanisch anspruchsvoller und aufwendiger Aufbau der offenbarten Kopplungseinrichtung und weiteren Kopplungseinrichtung notwendig.

Es ist deshalb Aufgabe der vorliegenden Erfindung, einen Luftausströmer der eingangs beschriebenen Art zu schaffen, bei dem eine Kopplung zwischen den Lamellen mit einfachen und kostengünstig herstellbaren Mitteln ermöglicht ist.

Bei einem Luftausströmer nach dem Oberbegriff des Anspruchs 1 ist diese Aufgabe dadurch gelöst, daß zwischen der wenigstens einen Rand-Lamelle und der jeweils benachbarten äußeren Lamelle mit Hilfe einer von der Kopplungseinrichtung getrennten, weiteren Kopplungseinrichtung eine Verbindung so ausgebildet ist, daß die Rand-Lamelle und die eine äußere Lamelle gleichzeitig schwenkbar sind.

Der wesentliche Vorteil, welcher mit der Erfindung gegenüber dem Stand der Technik erreicht ist, besteht darin, daß zwischen der Rand-Lamelle und der einen äußeren Lamelle mit Hilfe der weiteren Kopplungseinrichtung eine unmittelbare Verbindung ausgebildet ist, so daß es nicht notwendig ist, die Kopplungseinrichtung und die weitere Kopplungseinrichtung miteinander zu verbinden, um eine Schwenkbarkeit der einen Rand-Lamelle in Abhängigkeit von den mittleren Lamellen zu ermöglichen. Hierdurch ist der mechanische Aufbau des Luftausströmers wesentlich vereinfacht.

Die Vereinfachung des mechanischen Aufbaus führt darüber hinaus zu einem verminderten Platzbedarf für den Luftausströmer beim bestimmungsgemäßen Einbau in ein Kraftfahrzeug. Insbesondere im Bereich des Armaturenbretts steht nur ein begrenzter Raum für die Luftausströmer zur Verfügung.

Die Vereinfachung des mechanischen Aufbaus der Kopplungseinrichtungen zum Schwenken der Lamellen hat den weiteren Vorteil, daß die Zuverlässigkeit der Kopplungseinrichtungen bei häufigem Gebrauch verbessert ist, so daß die Lebensdauer der Luftausströmer zunimmt.

Bei einer vorteilhaften Ausgestaltung der Erfindung kann vorgesehen sein, daß benachbart zu einer anderen äußeren Lamelle eine weitere Rand-Lamelle schwenkbar angeordnet ist, und daß zwischen der anderen äußeren Lamelle und der weiteren Rand-Lamelle mit Hilfe einer von der Kopplungseinrichtung und von der weiteren Kopplungseinrichtung getrennten, zusätzlichen Kopplungseinrichtung eine Verbindung so ausgebildet ist, daß die andere äußere Lamelle und die weitere Rand-Lamelle gleichzeitig schwenkbar sind. Hierdurch ist der austretende Luftstrom sowohl im oberen als auch im unteren Randbereich so steuerbar, daß Verwirbelungen vermieden sind.

Zweckmäßig kann vorgesehen sein, daß die weitere Kopplungseinrichtung und/oder die zusätzliche Kopplungseinrichtung jeweils einteilig ausgebildet sind, wodurch eine mechanisch einfacher Aufbau der Kopplungseinrichtungen gewährleistet ist.

Bei einer bevorzugten Fortbildung der Erfindung ist vorgesehen, daß die weitere Kopplungseinrichtung und/oder die zusätzliche Kopplungseinrichtung jeweils als eine einzelne Koppelstange oder als ein einzelnes Winkelbauteil ausgebildet sind, die an der einen äußeren Lamelle und der einen Rand-Lamelle bzw. an der anderen äußeren Lamelle und der weiteren Rand-Lamelle drehbar gelagert ist. Hierdurch sind mit geringem Aufwand herstellbare und verschleißfeste Möglichkeiten zur Kopplung zwischen den Rand-Lamellen und der jeweiligen äußeren Lamelle geschaffen.

Eine Weiterbildung der Erfindung sieht vor, daß die eine und/oder die andere Rand-Lamelle in Bezug auf die Lamellen mit Hilfe der weiteren Kopplungseinrichtung bzw. der zusätzlichen Kopplungseinrichtung bei Betätigung der Kopplungseinrichtung in einer Schwenkstellung so angeordnet werden kann, daß ein zwischen den Lamellen austretender Luftstrom und ein zwischen der einen äußeren Lamelle und der einen Rand-Lamelle austretender Luftstrom und/oder ein zwischen der anderen äußeren Lamelle und der weiteren Rand-Lamelle austretender Luftstrom eine im wesentlichen gleiche Luftstromrichtung aufweisen. Hierdurch kann in jeder beliebigen Schwenkstellung der Lamellen ein optimierter, homogener Luftstrom erzeugt werden.

Vorteilhafte Ausgestaltungen der Erfindung sehen vor, daß der Luftausströmer in einem Gehäuse angeordnet ist, das im Bereich der einen und/oder im Bereich der weiteren Rand-Lamelle eine Blende derart aufweist, daß die eine und/oder die weitere Rand-Lamelle in einer beliebigen, offenen Schwenkstellung der mittleren Lamellen von außerhalb des Gehäuses wenigstens teilweise nicht sichtbar ist, bzw. daß die eine und/oder die weitere Rand-Lamelle wenigstens in einer geschlossenen Schwenkstellung der Lamellen von außerhalb des Gehäuses nicht sichtbar ist. Mittels der Blende ist der Luftaustritt im Bereich der Rand-Lamellen verhindert, obwohl diese im wesentlichen quer zu den Lamellen angeordnet sind, wenn sich der Luftausströmer in dem geschlossenen Zustand befindet.

Im folgenden werden Ausführungsbeispiele der Erfindung anhand einer Zeichnung näher erläutert. Hierbei zeigen:
Figur 1 eine perspektivische Darstellung der Lamellen eines Luftausströmers in einem geöffneten Zustand;
Figur 2 die Lamellenanordnung nach Figur 1 in Seitenansicht;
Figur 3 eine perspektivische Darstellung der Lamellen des Luftausströmers in einem geschlossenen Zustand; und
Figur 4 die Lamellenanordnung nach Figur 3 in Seitenansicht.

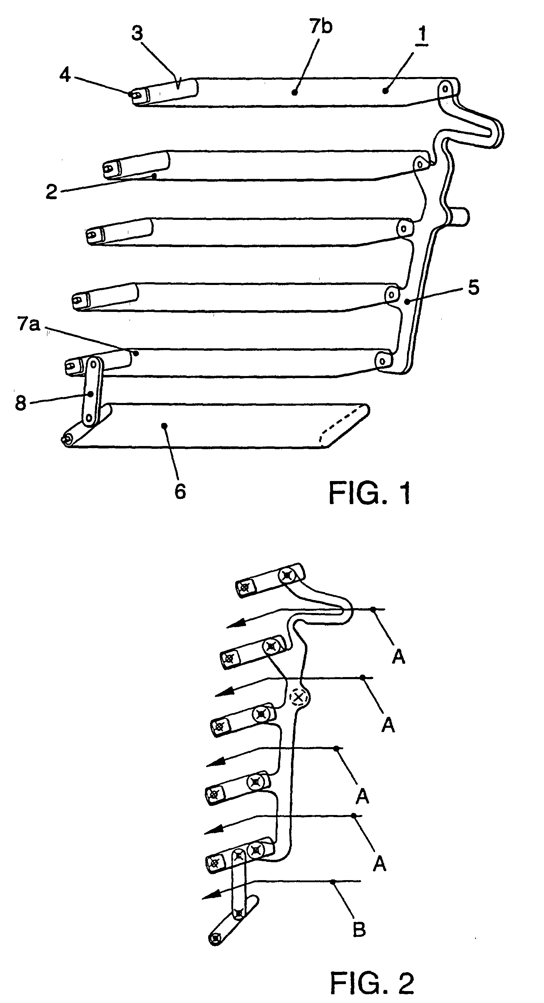

Gemäß Figur 1 weist ein Luftausströmer 1 Lamellen 2 auf, durch die ein Luftstrom ausströmen kann/dessen Richtung in Figur 2 mittels eines Pfeiles A angedeutet ist. Die Lamellen 2 sind abströmseitig derart in einem Rahmen oder einem Gehäuse (nicht dargestellt) gelagert, daß sie um eine Achse schwenkbar sind, die im wesentlichen quer zur Luftstromrichtung der ausströmenden Luft verläuft. Zu diesem Zweck weisen die Lamellen 2 auf seitlichen Flächen 3 Lagerzapfen 4 auf, die in zugehörigen Ausnehmungen in dem Rahmen oder dem Gehäuse angeordnet sind.

Der Luftausströmer 1 befindet sich in einem geöffneten Zustand, wenn die Lamellen 2, wie in Figur 1 dargestellt, in eine im wesentlichen horizontale Stellung geschwenkt sind. In diesem Zustand kann ein Luftstrom durch die Lamellen 2 ausströmen.

Die Lamellen 2 sind mit Hilfe einer Kopplungseinrichtung miteinander verbunden, die bei dem Ausführungsbeispiel nach Figur 1 als eine Koppelstange 5 ausgebildet ist. Die Lamellen 2 sind drehbar an der Koppelstange 5 derart angeordnet, daß sie mit Hilfe einer Betätigung der Koppelstange 5 gemeinsam bzw. gleichzeitig in verschiedene Schwenkstellungen bewegt werden können.

Die Lamellen umfassen äußere Lamellen 7a, 7b. Eine Rand-Lamelle 6 ist mit einer der äußeren Lamellen 7a über eine weitere Kopplungseinrichtung verbunden, die als eine einzelne Koppelstange 8 ausgebildet ist. Die eine äußere Lamelle 7a und die Rand-Lamelle 6 sind drehbar mit der einzelnen Koppelstange 8 verbunden. Die einzelne Koppelstange 8 und die Koppelstange 5 sind in entgegengesetzten Endbereichen der Lamellen 2, sein, daß die einzelne Koppelstange 8 und die Koppelstange 5 an demselben Endbereich der Lamellen 2 angeordnet sind (nicht dargestellt). Mit Hilfe der einzelnen Koppelstange 5 werden die Rand-Lamelle 6 und die äußere Lamelle 7a gemeinsam bewegt, wenn die Koppelstange 5 betätigt wird.

Da die eine äußere Lamelle 7 mit Hilfe der Koppelstange 5 mit den Lamellen 2 gleichzeitig geschwenkt werden kann, wird auch die Rand-Lamelle 6 mittels der einzelnen Koppelstange 8 mit den Lamellen 2 gleichzeitig geschwenkt. So ist es möglich, die Rand-Lamelle 6 in Bezug auf die Lamellen 2 in eine vorbestimmte Schwenkstellung zu bewegen.

Gemäß Figur 2 wird hierdurch gewährleistet, daß die mittels des Pfeils A in Figur 2 gezeigte Luftstromrichtung eines zwischen den Lamellen 2 austretenden Luftstroms und eine mittels eines Pfeils B in Figur 2 dargestellten zwischen der Rand-Lamelle 6 und der äußeren Lamelle 7a austretenden Luftstroms im wesentlichen übereinstimmen. Auf diesen Wege sind Verwirbelungen im Bereich der Rand-Lamelle 6 und der äußeren Lamelle 7a vermieden, so daß sich ein optimierter Luftstrom ergibt.

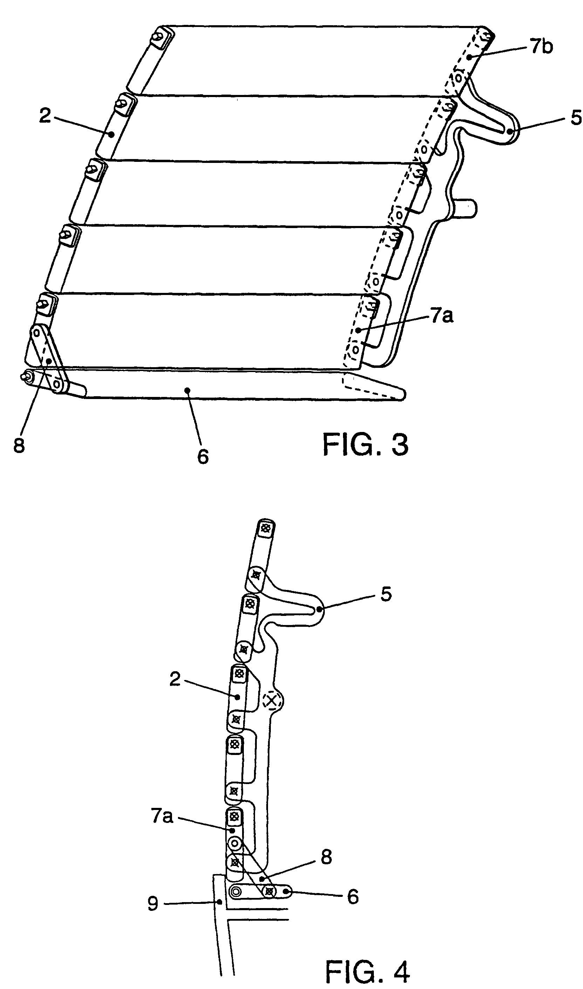

Gemäß den Figuren 3 und 4 ist die Rand-Lamelle 6 im wesentlichen quer zu den Lamellen 2 angeordnet, wenn die Lamellen 2 so angeordnet sind, daß der Luftausströmer 1 in einem geschlossenen Zustand ist. In dem geschlossenen Zustand ist das Ausströmen von Luft verhindert.

In dem geschlossenen Zustand des Luftausströmers 1 ist die Rand-Lamelle 6 vollständig hinter einer Blende 9 angeordnet (vgl. Figur 4). Hierdurch ist verhindert, daß in dem geschlossenen Zustand des Luftausströmers 1 Luft in dem Bereich der Rand-Lamelle 6 ausströmt, obwohl die Rand-Lamelle 6 im wesentlichen quer zu den Lamellen 2 angeordnet ist.

Im geöffneten Zustand des Luftausströmers 1 ist die Rand-Lamelle 6 gemäß Figur 2 wenigstens teilweise von der Blende 9 verdeckt.

Der Schwenkbereich der Rand-Lamelle 6 ist gegenüber dem Schwenkbereich der mittleren Lamellen 2 kleiner. Dieses hat den Vorteil, daß der beim Einbau des Luftausströmers, beispielsweise in ein Armaturenbrett, zur Verfügung stehende Raum optimal genutzt wird.

Bei einer bevorzugten Ausführungsfonn kann eine weitere Rand-Lamelle (nicht dargestellt) benachbart zur anderen äußeren Lamelle 7b vorgesehen sein. die oberhalb der Lamellen 2 angeordnet ist. Hinsichtlich der Kopplung der weiteren Rand-Lamelle mit der anderen äußeren Lamelle und des Schwenkens der weiteren Rand-Lamelle gilt das im Zusammenhang mit der Rand-Lamelle 6 gesagte entsprechend.

Vorzugsweise können zur Vermeidung von Verwirbelungen des austretenden Luftstroms sowohl die Rand-Lamelle 6 als auch die weitere Rand-Lamelle vorgesehen sein. Die Rand-Lamelle 6 und die weitere Rand-Lamelle sind in diesem Fall jeweils mittels einer getrennten Kopplungseinrichtung mit der zu ihnen benachbarten äußeren Lamelle 7a bzw. 7b verbunden.

### BEZUGSZEICHENLISTE

- 1: Luftausströmer
- 2: Lamelle
- 3: seitliche Fläche der Lamelle 2
- 4: Lagerzapfen
- 5: Koppelstange
- 6: Rand-Lamelle
- 7a, 7b: äußere Lamelle
- 8: einzelne Koppelstange
- 9: Blende

## Patentansprüche

1. Luftausströmer (1), insbesondere für einen Fahrzeuginnenraum, mit schwenkbar angeordneten Lamellen (2), die äußere Lamellen (7a, 7b) umfassen und die mit Hilfe einer Kopplungseinrichtung (5) so miteinander gekoppelt sind. daß die Lamellen (2) bei Betätigung der Kopplungseinrichtung (5) gleichzeitig geschwenkt werden können, und wenigstens einer Rand-Lamelle (6), die benachbart zu einer der äußeren Lamellen (7a) schwenkbar angeordnet ist, **dadurch gekennzeichnet, daß** zwischen der wenigstens einen Rand-Lamelle (8) und der jeweils benachbarten äußeren Lamelle (7a) mit Hilfe einer von der Kopplungseinrichtung (5) getrennten, weiteren Kopplungseinrichtung (8) eine Verbindung so ausgebildet ist, daß die Rand-Lamelle und die eins äußere Lamelle (7a) gleichzeitig schwenkbar sind, und daß die weitere Kopplungseinrichtung (8) an der einen äußeren Lamelle (7a) und der einen Rand-Lamelle (6) drehbar gelagert ist, wobei die eine Rand-Lamelle (6) in bezug auf die Lamellen (2) mit Hilfe der weiteren Koppiungsetnr(chtung (8) bei Betätigung der Kopplungseinrichtung (5) so angeordnet werden kann, daß ein zwischen den Lamellen (2) austretender Luftstrom (A) und ein zwischen der einen äußeren Lamelle (7a) und der einen Rand-Lamelle (6) austretender Luftstrom (B) eine im wesentlichen gleiche Luftstromrichtung aufweisen.

2. Luftausströmer (1) nach Anspruch 1, **dadurch gekennzeichnet, daß** die weitere Kopplungseinrichtung (8) einteilig ausgebildet ist.

3. Luftausströmer (1) nach Anspruch 1 oder 2, **dadurch gekennzeichnet, daß** die weitere Kopplungseinrichtung als eine einzelne Koppelstange oder als ein einzelnes Winkelbauteil ausgebildet ist

4. Luftausströmer (1) nach einem der vorhergehenden Ansprüche, **dadurch gekennzeichnet, daß** der Luftausströmer (1) in einem Gehäuse angeordnet ist, das im Bereich der einen Rand-Lamelle (6) eine Blende (9) derart aufweist, daß die eine Rand-Lamelle (6) in einer beliebigen, offenen Schwenkstellung der Lamelle (2) von außerhalb des Gehäuses wenigstens teilweise nicht sichtbar ist.

5. Luftausströmer (1) nach Anspruch 4, **dadurch gekennzeichnet, daß** die eine Rand-Lamelle (6) wenigstens in einer geschlossenen Schwenkstellung der Lamellen (2) von außerhalb des Gehäuses nicht sichtbar ist.

6. Luftausströmer (1) nach einem der vorhergehenden Ansprüche, **dadurch gekennzeichnet, daß** benachbart zu einer anderen der äußeren Lamellen (7b) eine weitere Rand-Lamelle schwenkbar angeordnet ist, und daß zwischen der anderen äußeren Lamelle (7b) und der welteren Rand-Lamelle mit Hilfe einer von der Kopplungseinrichtung (5) und von der weiteren Kopplungseinrichtung (8) getrennten, zusätzlichen Kopplungseinrichtung eine weitere Verbindung so ausgebildet ist, daß die andere äußere Lamelle (7b) und die weitere Rand-Lamelle gleichzeitig schwenkbar sind.

7. Luftausströmer (1) nach Anspruch 6, dadurch gekannzeichnet, daß die zusätzliche Kopplungseinrichtung einteilig ausgebildet ist.

8. Luftausströmer (1) nach Anspruch 6 oder 7, **dadurch gekennzeichnet, daß** die zusätzliche Kopplungseinrichtung als eine einzelne Koppelstange oder als ein einzeines Winkelbauteil ausgebildet ist

9. Lufteusströmer (1) nach einem der Anspruche 6 bis 8. **dadurch gekennzeichnet daß** die weiters Rand-Lamelle in bezug auf die Lamellen (2) mit Hilfe der zusätzlichen Kopplungseinrichtung bel Betätigung der Kopplungseinrichtung (5) so angeordnet werden kann. daß ein zwischen den lamellen (2) austretender Luftstrom (A) und ein zwischen der anderen äußeren Lamelle (7b) und der weiteren Rand-Lamelle austretender Luftstrom eine im wesentlichen gleiche Luftstromrichtung aufweisen.

10. Luftausströmer (1) nach einem der Anspruche 6 bis 9. **dadurch gekennzeichnet, daß** die zusätzliche Kopplungseinrichtung an der anderen äußeren Lamelle (7b) und der weiteren Rand-Lamelle drehbar gelagert Ist

11. Luftausströmer (1) nach einem der Ansprüche 6 bis 10. **dadurch gekennzeichnet, daß** der Luftausströmer (1) in einem Gehäuse angeordnet ist, das im Bereich der weiteren Rand-Lamelle eine Blende derart aufweist, daß die weitere Rand-Lamelle in einer beliebigen, offenen Schwenkstellung der Lamellen (2) von außerhalb des Gehäuses wenigstens teilweise nicht sichtbar ist

12. Luftausströmer (1) nach Anspruch 11, **dadurch gekennzeichnet daß** die weitere Rand-Lamelle wenigstens in einer geschlossenen Schwenkstellung der Lamellen (2) von außerhalb des Gehäuses nicht sichtbar ist.

## Claims

1. Air vent (1), in particular for a vehicle interior, having slats (2) which are arranged pivotably and include outer slats (7a, 7b) and which are coupled to one another with the aid of a coupling device (5) in such a manner that the slats (2) can be pivoted simultaneously when the coupling device (5) is actuated, and having at least one edge slat (6) which is arranged pivotably adjacent to one of the outer slats (7a), **characterized in that** a connection is formed between the at least one edge slat (6) and the respectively adjacent, outer slat (7a) with the aid of a further coupling device (8), which is separated from the coupling device (5), in such a manner that the edge slat and the one outer slat (7a) can be pivoted simultaneously, and **in that** the further coupling device (8) is mounted rotatably on the one outer slat (7a) and the one edge slat (6), it being possible for the one edge slat (6) to be arranged with respect to the slats (2) with the aid of the further coupling device (8), when the coupling device (5) is actuated, in such a manner that an air flow (A) emerging between the slats (2) and an air flow (B) emerging between the one outer slat (7a) and the one edge slat (6) have an essentially identical air-flow direction.

2. Air vent (1) according to Claim 1, **characterized in that** the further coupling device (8) is designed as a single part.

3. Air vent (1) according to Claim 1 or 2, **characterized in that** the further coupling device is designed as an individual coupling rod or as an individual angular component.

4. Air vent (1) according to one of the preceding claims, **characterized in that** the air vent (1) is arranged in a housing which has, in the region of the one edge slat (6), a screen (9) in such a manner that at least part of the one edge slat (6) cannot be seen from outside the housing in any desired, open pivoted position of the slat (2).

5. Air vent (1) according to Claim 4, **characterized in that** the one edge slat (6) cannot be seen from outside the housing at least in a closed pivoted position of the slats (2).

6. Air vent (1) according to one of the preceding claims, **characterized in that** a further edge slat is arranged pivotably adjacent to another of the outer slats (7b), and **in that** a further connection is formed between the other, outer slat (7b) and the further edge slat with the aid of an additional coupling device, which is separated from the coupling device (5) and from the further coupling device (8), in such a manner that the other, outer slat (7b) and the further edge slat can be pivoted simultaneously.

7. Air vent (1) according to Claim 6, **characterized in that** the additional coupling device is designed as a single part.

8. Air vent (1) according to Claim 6 or 7, **characterized in that** the additional coupling device is designed as an individual coupling rod or as an individual angular component.

9. Air vent (1) according to one of Claims 6 to 8, **characterized in that** the further edge slat can be arranged with respect to the slats (2) with the aid of the additional coupling device, when the coupling device (5) is actuated, in such a manner that an air flow (A) emerging between the slats (2) and an air flow emerging between the other, outer slat (7b) and the further edge slat have an essentially identical air-flow direction.

10. Air vent (1) according to one of Claims 6 to 9, **characterized in that** the additional coupling device is mounted rotatably on the other, outer slat (7b) and the further edge slat.

11. Air vent (1) according to one of Claims 6 to 10, **characterized in that** the air vent (1) is arranged in a housing which has, in the region of the further edge slat, a screen in such a manner that at least part of the further edge slat cannot be seen from outside the housing in any desired, open pivoted position of the slats (2).

12. Air vent (1) according to Claim 11, **characterized in that** the further edge slat cannot be seen from outside the housing at least in a closed pivoted position of the slats (2).

## Revendications

1. Aérateur (1), en particulier pour l'habitacle d'un véhicule, comprenant des lamelles (2) disposées de manière pivotante, comprenant des lamelles extérieures (7a, 7b) et qui sont accouplées les unes aux autres à l'aide d'un dispositif d'accouplement (5) de telle sorte que les lamelles (2) puissent être pivotées simultanément lors de l'actionnement du dispositif d'accouplement (5), et au moins une lamelle de bord (6), qui est disposée de manière pivotante à côté de l'une des lamelles extérieures (7a), **caractérisé en ce qu'**entre l'au moins une lamelle de bord (6) et la lamelle extérieure voisine respective (7a), est réalisée une liaison à l'aide d'un dispositif d'accouplement supplémentaire (8) distinct du dispositif d'accouplement (5), de telle sorte que la lamelle de bord et l'une des lamelles extérieures (7a) puissent pivoter simultanément et **en ce que** le dispositif d'accouplement supplémentaire (8) est monté à rotation sur l'une des lamelles extérieures (7a) et la lamelle de bord (6), la lamelle de bord (6) pouvant être disposée par rapport aux lamelles (2) à l'aide du dispositif d'accouplement supplémentaire (8) lors de l'actionnement du dispositif d'accouplement (5) de telle sorte qu'un courant d'air (A) sortant entre les lamelles (2) et un courant d'air (B) sortant entre l'une des lamelles extérieures (7a) et la lamelle de bord (6) présentent une orientation de courant d'air essentiellement identique.

2. Aérateur (1) selon la revendication 1, **caractérisé en ce que** le dispositif d'accouplement supplémentaire (8) est réalisé d'une pièce.

3. Aérateur (1) selon la revendication 1 ou 2, **caractérisé en ce que** le dispositif d'accouplement supplémentaire est réalisé sous la forme d'une tige d'accouplement unique ou d'un composant coudé unique.

4. Aérateur (1) selon l'une quelconque des revendications précédentes, **caractérisé en ce que** l'aérateur (1) est disposé dans un boîtier qui présente, dans la région de la lamelle de bord (6), un écran (9), de telle sorte que la lamelle de bord (6) ne soit pas visible au moins en partie depuis l'extérieur du boîtier, dans une position de pivotement quelconque ouverte des lamelles (2).

5. Aérateur (1) selon la revendication 4, **caractérisé en ce que** la lamelle de bord (6) n'est pas visible depuis l'extérieur du boîtier au moins dans une position de pivotement fermée des lamelles (2).

6. Aérateur (1) selon l'une quelconque des revendications précédentes, **caractérisé en ce qu'**une lamelle de bord supplémentaire est disposée de manière pivotante à côté d'une autre des lamelles extérieures (7b), et **en ce qu'**entre l'autre lamelle extérieure (7b) et l'autre lamelle de bord, est réalisée une liaison supplémentaire à l'aide d'un dispositif d'accouplement supplémentaire distinct du dispositif d'accouplement (5) et du dispositif d'accouplement supplémentaire (8), de telle sorte que l'autre lamelle extérieure (7b) et la lamelle de bord supplémentaire puissent pivoter simultanément.

7. Aérateur (1) selon la revendication 6, **caractérisé en ce que** le dispositif d'accouplement supplémentaire est réalisé d'une pièce.

8. Aérateur (1) selon la revendication 6 ou 7, **caractérisé en ce que** le dispositif d'accouplement supplémentaire est réalisé sous la forme d'une tige d'accouplement unique ou d'un composant coudé unique.

9. Aérateur (1) selon l'une quelconque des revendications 6 à 8, **caractérisé en ce que** la lamelle de bord supplémentaire peut être disposée par rapport aux lamelles (2) à l'aide du dispositif d'accouplement supplémentaire lors de l'actionnement du dispositif d'accouplement (5) de telle sorte qu'un courant d'air (A) sortant entre les lamelles (2) et un courant d'air sortant entre l'autre lamelle extérieure (7b) et la lamelle de bord supplémentaire présentent une orientation de courant d'air essentiellement identique.

10. Aérateur (1) selon l'une quelconque des revendications 6 à 9, **caractérisé en ce que** le dispositif d'accouplement supplémentaire est monté à rotation sur l'autre lamelle extérieure (7b) et sur la lamelle de bord supplémentaire.

11. Aérateur (1) selon l'une quelconque des revendications 6 à 10, **caractérisé en ce que** l'aérateur (1) est disposé dans un boîtier qui présente, dans la région de la lamelle de bord supplémentaire, un écran, de telle sorte que la lamelle de bord supplémentaire ne soit pas visible au moins en partie depuis l'extérieur du boîtier, dans une position de pivotement quelconque ouverte des lamelles (2).

12. Aérateur (1) selon la revendication 11, **caractérise en ce que** la lamelle de bord supplémentaire n'est pas visible depuis l'extérieur du boîtier au moins dans une position de pivotement fermée des lamelles (2).
